# Europäisches Patentamt

# European Patent Office

# Office européen des brevets

(19)

(11) Numéro de publication: **0 109 995**
**B1**

(12) **FASCICULE DE BREVET EUROPEEN**

(45) Date de publication du fascicule du brevet:
06.08.86

(51) Int. Cl.⁴: **A 01 J 25/16**

(21) Numéro de dépôt: 82420164.4

(22) Date de dépôt: 26.11.82

(54) Claie d'affinage perfectionnée moulée en matière plastique.

(43) Date de publication de la demande:
13.06.84 Bulletin 84/24

(45) Mention de la délivrance du brevet:
06.08.86 Bulletin 86/32

(84) Etats contractants désignés:
**BE CH DE GB IT LI NL SE**

(56) Documents cités:
FR - A - 1 550 272
FR - A - 1 583 115
FR - A - 2 015 670
FR - A - 2 096 016
FR - A - 2 185 350
FR - A - 2 252 812
FR - A - 2 405 010

(73) Titulaire: **A. MINO-GAILLARD S.A., 11, rue Pasteur,
F-01101 Oyonnax Cedex (FR)**
Titulaire: **Fromageries BRESSE BLEU, Saint Paul de
Varax, F-01240 Servas (FR)**

(72) Inventeur: **Mino Vercellio, Albert, 48, avenue Général de
Gaulle Marchon-Par-Arbent, F-01100 Oyonnax (FR)**

(74) Mandataire: **Karmin, Roger et al, Cabinet
MONNIER 150, cours Lafayette, F-69003 Lyon (FR)**

ACTORUM AG

**Description**

La présente invention se réfère aux claies d'affinage des fromages et elle vise plus particulièrement celles réalisées par moulage sous pression d'une matière plastique.

On sait que les claies du genre en question permettent une économie substantielle si l'on compare leur coût de fabrication à celui des claies en aluminium ou en acier inoxydable dont les divers éléments doivent être positionnés puis soudés les uns aux autres.

Toutefois, la plupart des claies actuellement connues présentent l'inconvénient principal d'occuper à vide le même volume qu'à plein. Autrement dit, lorsque les claies disponibles dans le commerce sont stockées en dehors de leur période d'utilisation, elles occupent la même place que lorsqu'elles sont utilisées. On comprende aisément que ce facteur entraîne une augmentation considérable de l'importance des entrepôts.

En outre, les claies connues ne permettent pas une manutention mécanique complète et rationelle en vue de les empiler ou au contraire de les extraire des piles déjà formées.

On connaît par le document FR-A-1 550 272 des claies métalliques susceptibles d'être empilées à vide sans prise en compte de la hauteur de leurs pieds du fait que dans cette position elles sont décalées latéralement toutes dans le même sens. Si l'on réalise des piles de palettes, d'une part l'encombrement latéral est important, d'autre part le nombre de palettes est limité par l'écartement de leurs pieds. En effet, le décalage d'une palette par rapport à l'autre est égal à l'épaisseur d'un pied et le nombre de palettes empilables est directement dépendant de l'écartement des pieds et de leur épaisseur.

Les perfectionnements qui font l'objet de la présente invention visent à rémédier aux inconvénients sus-mentionnés et à permettre la réalisation d'une claie d'affinage en matière plastique qui réponde mieux que jusqu'à présent aux divers desiderata de la pratique.

On prévoit suivant l'invention d'agencer chaque claie de manière à permettre lors du stockage à vide d'éliminer la prise en compte de la hauteur des pieds. A cet effet, les deux petits côtés de son plateau comportent chacun deux décrochements adjacents aux pieds cprrespondants et situés entre ceux-ci et l'axe longitudinal du plateau, lesdits décrochements déterminant pour chaque côté d'une part une barrette médiane de prèhension et d'autre part deux passages libres pour les pieds des claies empilées.

Les décrochements considérés déterminent entre eux une saillie transversale ou barrette propre à permettre la préhension de chaque claie par un dispositif de manutention mécanique.

Enfin le moule destiné à l'injection de la matière plastique propre à constituer une claie suivant l'invention est agencé de manière qu'il soit possible d'échanger des éléments de sorte à permettre la production de claies présentant des hauteurs de pieds différentes.

Le dessin annexé, donné à titre d'exemple, permettra de mieux comprendre l'invention, les caractéristiques qu'elle présente et les avantages qu'elle est susceptible de procurer:

Fig. 1 est une vue en perspective d'une claie établie conformément à l'invention.

Fig. 2 illustre trois claies gerbées les unes sur les autres de manière que le plateau de chacune d'elles puisse recevoir des fromages à affiner.

Fig. 3 est une vue correspondant à celle de fig. 2 mais illustrant la manière dont les claies sont superposées à vide.

Fig. 4 est une coupe transversale à plus grande échelle montrant la forme des barreaux formant le plateau sur lequel sont disposés les fromages à affiner.

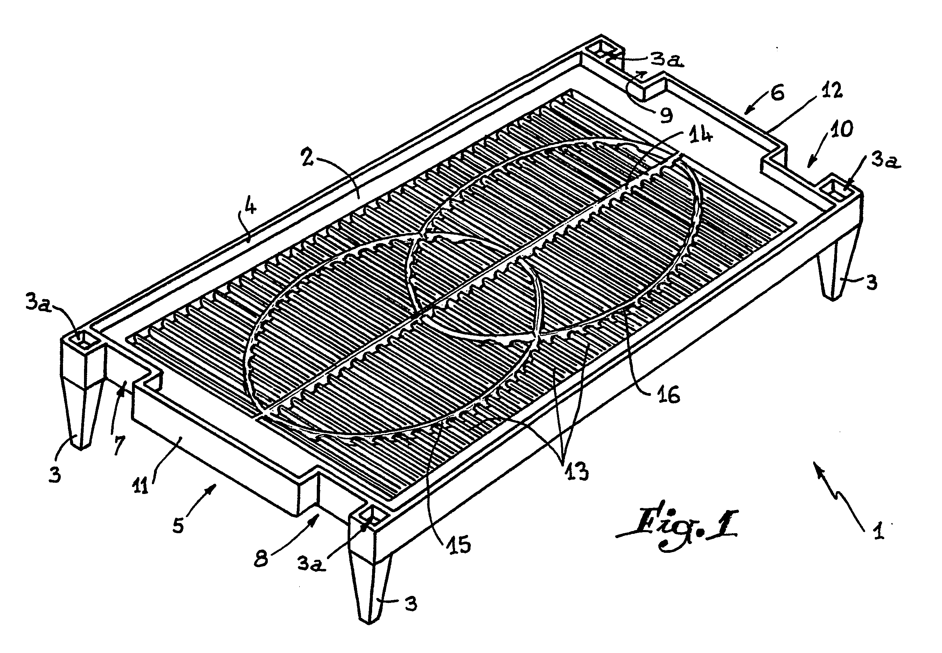

On a illustré en fig. 1 une claie établie conformément à l'invention et à laquelle on a affecté la référence générale 1. Cette claie comprend principalement un plateau rectangulaire 2 supporté par quatre pieds 3 situés chacun à l'un des angles du plateau. Ce dernier est entouré d'un rebord 4 qui s'élève perpendiculairement et se trouve situé au niveau de son pourtour.

On observe que les deux petits côtés du plateau 2 et qui ont été référencés 5 et 6, sont pourvus de deux décrochements ou zones 7, 8 respectivement 9, 10 aménagés en retrait vers l'intérieur du plateau sur toute son épaisseur et se trouvant adjacents aux deux pieds de chacun des côtés 5 et 6 en question. La profondeur de chaque décrochement est légèrement supérieure à la plus grande largeur de chaque pied 3 prévu en forme de tronc de pyramide évasé vers le haut. De même la longueur de chaque décrochement est supérieure à deux fois la même dimension des pieds comme on l'expliquera mieux plus loin.

Les deux décrochements déterminent entre elles une barrette centrale 11, respectivement 12 qui permet la préhension de la claie par des moyens mécaniques tels que des pinces de chariots de manutention prévus à cet effet et qui sont bien connus dans la fromagerie pour empiler des claies ou des moules à fromages, pour défaire ces piles ou encore effectuer le retournement des dispositifs en question.

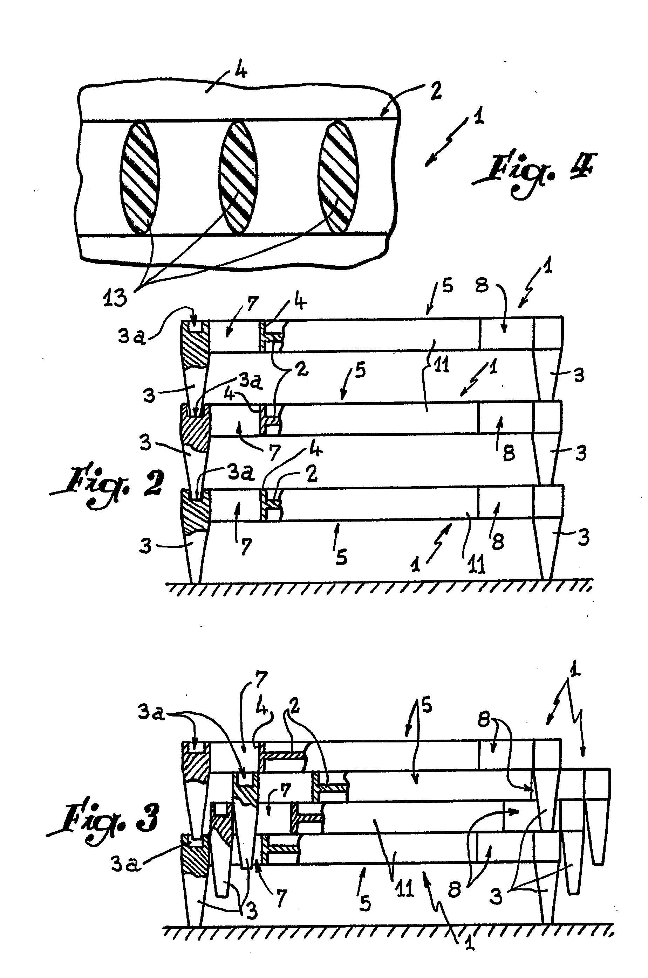

On observe que le rebord 4 du plateau 2 suit le pourtour des deux côtés 5 et 6 c'est-à-dire qu'il borde les décrochements et la barrette centrale. Le rebord 4 entoure également le dessus des pieds 3 de manière à constituer à ce niveau et dans l'axe de chaque pied une cavité 3a présentant en profil en plan une section supérieure à celle de l'extrémité des pieds. Ainsi lorsqu'on veut gerber des claies comme illustré en fig. 2, l'extrémité de chaque pied 3 vient reposer dans la cavité 3a de la claie située en dessous de celle considérée de manière à centrer les deux claies l'une par rapport à l'autre.

Lorsque les claies ne sont pas utilisées, elles sont également superposées comme illustré en fig. 3. Une première claie 1 est posée sur le sol ou sur toute autre surface, puis une seconde claie est placée sur la première avec deux de ses pieds traversant les décrochements 7 et 9 de la première claie tandis que ses deux autres pieds se trouvent à l'éxtérieur. Sur la deuxième claie on en place une troisième de la même manière, ses pieds 3 traversant d'abord les deux décrochements 7, 9 de la seconde claie puis celle de la première. Là encore les deux autres pieds sont disposés à l'extérieur de ceux de la seconde claie. Suivant la hauteur des pieds 3 on prévoit ainsi de faire varier la longueur des décrochements de manière à stocker un nombre convenable de claies avec leurs pieds traversant ces décrochements. Dans l'exemple représenté la hauteur des pieds 3 est telle qu'une fois que trois claies ont été gerbées la quatrième peut être placée de manière que l'extrémité de ses pieds soit pratiquement au niveau du fond des cavités 3a. On recommence ensuite à placer deux claies de la même manière que la deuxième et la troisième précédemment citées. Là encore la longueur des pieds 3 est telle qu'ils ne peuvent pas entrer en contact avec le plateau des deux claies gerbées sur la première. Autrement dit la hauteur libre des pieds est fonction de l'épaisseur de son plateau (4) et du nombre de claies que l'on désire empiler avec leurs pieds (3) traversant les décrochements (7, 8-9, 10) de la première claie d'une pile.

Ainsi, compte non tenue de la hauteur des pieds de la première claie, la hauteur de stockage d'une pile de claies est pratiquement égale à la somme des épaisseurs de leurs plateaux.

Etant donné que l'affinage nécessite un contact aussi réduit que possible du plateau et des fromages, le plateau 2 est réalisé sous la forme de barreaux transversaux ou longitudinaux, référencés 13 (fig. 4) et qui présentent en section transversale une forme ovale avec le plus grand axe situé à la verticale de telle sorte qu'ils ont une double dépouille permettant de placer le plan de joint du moule au niveau de leur partie médiane et que leur surface de contact avec les fromages est réduite.

Comme illustré en fig. 1 les barreaux 13 sont réunis par des renforts évitant leur flambage sous le poids des fromages. On a ainsi prévu un cordon longitudinal médian 14 et deux cordons elliptiques 15 et 16. On note que les renforts 14, 15 et 16 présentent un section transversale une forme identique à celle des barreaux 13. Bien entendu les renforts en question pourraient être réalisés sous toute autre forme sans sortir du cadre de l'invention.

Comme indiqué précédemment le moule destiné à la production d'une claie 1 suivant l'invention pourrait être exécuté de manière à permettre la réalisation de pieds 3 de différentes hauteurs par simple changement de pièces démontables.

### Revendications

1. Claie d'affinage moulée en matière plastique du genre comprenant un plateau ajouré (2) et des pieds (3) disposés chacun à un angle du plateau (2), le gerbage utile des palettes s'effectuant par introduction des pieds (3) de la claie supérieure dans des ouvertures (3c) prévues à la partie supérieure des pieds de la claie inférieure, tandis que leur empilage à vide s'effectue par décalages successifs, caractérisée en ce que les deux petits côtés (5, 6) de son plateau (2) comportent chacun deux décrochements (7, 8; 9, 10) adjacents aux pieds (3) correspondants et situés entre ceux-ci et l'axe longitudinal du plateau, lesdits décrochements déterminant pour chaque côté d'une part une barrette médiane de préhension (11, 12) et d'autre part deux passages libres pour les pieds des claies empilées.

2. Claie suivant la revendication 1, caractérisée en ce que la longueur des encoches (7, 8; 9, 10) est déterminée en fonction de la largeur des pieds (3).

3. Claie suivant la revendication 2, caractérisé en ce que la hauteur libre de ses pieds est fonction de l'épaisseur de son plateau (4) et du nombre de claies que l'on désire empiler avec leurs pieds (3) traversant les encoches (7, 8; 9, 10) de la première claie d'une pile.

4. Claie suivant la revendication 3, caractérisée en ce que son plateau (2) est pourvu de barreaux (13) présentant en section une forme ovale à leurs assurer une double dépouille afin que le moule comporte un plan de joint situé au milieu de chaque barreau (13) et que la surface de contact avec les fromages soit réduite.

5. Claie suivant la revendication 4, caractérisé en ce que les barreaux (13) sont réunis par des cordons (14, 15, 16) destinés à les renforcer, ces derniers affectant en section transversale une forme identique à celle desdites barreau (13).

### Patentansprüche

1. Veredelungshürde aus Kunststoff, bestehend aus einer durchbrochenen Scheibe (2) und jeweils in einem Winkel der Platte (2) angeordneten Füssen (3), wobei die nutzbare Zusammensetzung Stapelung der Paletten durch Einführen der Füsse (3) der oberen Hürde in die im oberen Teil der Füsse der unteren Hürde vorgesehenen Öffnungen (3c) erfolgt, während ihre Stapelung im Leerzustand durch aufeinanderfolgende Verschiebungen vorgenommen wird, dadurch gekennzeichnet, dass die beiden kleinen Seiten (5, 6) der Platte (2) jeweils zwei Absätze (7, 8, 9, 10) neben den entsprechenden Füssen (3) und zwischen diesen und der Längsachse der Platte liegend aufweisen und die Absätze für jede Seite einerseits eine mittlere Greifstange (11, 12) und andererseits zwei freie Durchtritte für die Füsse der gestapelten Hürden begrenzen.

2. Hürde nach Anspruch 1, dadurch gekennzeichnet, dass die Länge der Einschnitte (7, 8, 9, 10) durch die Breite der Füsse (3) bestimmt wird.

3. Hürde nach Anspruch 2, dadurch gekennzeichnet, dass die freie Höhe ihrer Füsse sich nach der Dicke ihrer Platte (4) und der Zahl der aufeinanderzustapelnden Hüdern richtet, deren Füssen (3) durch die Einschnitte (Aussparungen) (7, 8, 9, 10) der ersten Hürde eines Stapels greifen.

4. Hürde nach Anspruch 3, dadurch gekennzeichnet, dass ihre Platte (2) mit Gitterstäben (13) versehen ist, die im Schnitt eine ovale Form aufweisen, um ihnen eine doppelte Verjüngung (Einziehung) zu verleihen, damit die Form eine Gelenkfuge in der Mitte jedes Gitterstabes (13) aufweist und die Kontaktfläche mit den Käselaiben verringert wird.

5. Hürde nach Anspruch 4, dadurch gekennzeichnet, dass die Gitterstäbe (13) durch Schnüre (14, 15, 16) zu ihrer Verstärkung vereinigt sind, die im Querschnitt eine derjenigen der Gitterstäbe gleiche Form aufweisen.

**Claims**

1. Ripening tray moulded from a plastics material of the type comprising a perforated plate (2) and feet (3), each located at an angle of plate (2), the useful stacking of the members taking place by introducing the feet (3) of the upper tray into openings (3c) provided in the upper part of the feet of the lower tray, whilst the empty stacking thereof takes place by successive displacements, characterized in that the two small sides (5, 6) of its plate (2) have in each case two recesses (7, 8, 9, 10) adjacent to the corresponding feet (3) and located between them and the longitudinal axis of the plate, said recesses defining for each side on the one hand a median gripping strip (11, 12) and on the other two free passages for the feet of the stacked trays.

2. Tray according to claim 1, characterized in that the lenght of the recesses (7, 8, 9, 10) is demined as a function of the width of the feet (3).

3. Tray according to claim 2, characterized in that the free height of these feet is a function of the thickness of its plate (4) and the number of trays which it is wished to stack with their feet (3) traversing the recesses (7, 8, 9, 10) of the first tray of a stack.

4. Tray according to claim 3, characterized in that its plate (2) is provided with bars (13) having in section an oval shape suitable to provide the same with a double taper or clearance in order that the mould has a parting plane located in the centre of each bar (13) and the contact surface with the cheeses is reduced.

5. Tray according to claim 4, characterized in that the bars (13) are joined by bands (14, 15, 16) for reinforcing the same, whereby the latter have in cross-section a shape identical to that of said bars (13).

Fig.1

Fig. 4

Fig. 2

Fig. 3